# EUROPEAN PATENT APPLICATION

(11) **EP 3 754 487 A1**
(43) Date of publication of application: **23.12.2020**
(21) Application number: 19755237.5
(22) Date of filing: 03.02.2019
(51) Int. Cl.: G06F 9/22

(54) **BRANCH PREDICTION CIRCUIT AND CONTROL METHOD THEREFOR**

(30) Priority: 13.02.2018 CN 201810150219
(71) Applicant: Loongson Technology Corporation Limited, Zhongguancun, Haidian District Beijing 100190 (CN)
(72) Inventor: HU, Weiwu, Beijing 100095 (CN); WANG, Wenxiang, Beijing 100095 (CN); WU, Ruiyang, Beijing 100095 (CN)
(74) Representative: Elzaburu S.L.P.
(86) International application number: PCT/CN2019/074693
(87) International publication number: WO 2019/158020

(57) **Abstract**

A branch prediction circuit and a control method therefor relate to the field of computer technologies. The branch prediction circuit includes at least one branch predictor 110, where the branch predictor 110 includes a prediction information determining module 120, a readout circuit 130 and a branch prediction table 140. The prediction information determining module 120 determines target prediction information corresponding to a to-be-predicted branch instruction according to program identification information 150 corresponding to the to-be-predicted branch instruction and a branch prediction table 140; and the readout circuit 130 sends the target prediction information to a branch instruction execution and control unit 200, so that the branch instruction execution and control unit 200 performs prediction processing according to the target prediction information, and generates a prediction result corresponding to the to-be-predicted branch instruction. The circuit and the method solve the problem that a branch predictor in the prior art cannot distinguish different programs which results in that a malicious attack program may indirectly manipulate guessing behaviors of the branch predictor when the attacked program is executed.

## Description

### TECHNICAL FIELD

The present invention relates to the field of communication technologies and, in particular, to a branch prediction circuit and a control method for a branch prediction circuit.

### BACKGROUND

Branch prediction technology is usually used in modern microprocessor designs to improve processor performance. Specifically, in the instruction pipeline of a processor, the result of a branch instruction determines the instruction fetching of subsequent instructions. The use of branch prediction technology can avoid pipeline blockage caused by branch instructions, and as many instructions as possible are fetched into the instruction pipeline for execution, thereby improving the throughput rate of the instruction pipeline.

In specific implementations, dynamic branch prediction technology is usually used in high-performance microprocessors to guess for branch instructions to obtain a higher accuracy rate. The dynamic branch prediction is to perform prediction based on the execution history of branch instructions, and a complex branch guess structure is needed to save the historical data of branch instructions. The branch guess structure predicts the future jump direction and target of a branch instruction mainly based on the branch history of the branch instruction. For example, when a branch predictor is used to make a prediction, the value of a program counter (Program Counter, PC) of the currently predicted branch instruction can be compared with the value of a PC of the to-be-found entry in a branch target buffer (Branch Target Buffer, BTB) table. If the PC value of the currently predicted branch instruction is equal to the PC value of the to-be-found entry, it can be predicted, based on the value of a saturating counter of the to-be-found entry, whether to jump, and the jump target of the branch instruction can be predicted. For example, the jump target address of the branch instruction is read out while the jump direction of the branch instruction is predicted. However, the branch predictor in the prior art cannot distinguish between different programs, resulting in that a malicious attack program may indirectly manipulate guessing behaviors of the branch predictor when the attacked program is executed.

### SUMMARY

In view of the above problems, embodiments of the present invention are proposed in order to provide a branch prediction circuit, a corresponding control method for a branch prediction circuit and a processor with the branch prediction circuit to overcome the above problems or at least partially solve the above problems.

In order to solve the above problem, an embodiment of the present invention discloses a branch prediction circuit, which is applied to a processor having the ability to execute branch instructions. The branch prediction circuit includes at least one branch predictor, and the branch predictor includes a prediction information determining module, a readout circuit and a branch prediction table. Where the prediction information determining module determines target prediction information corresponding to a to-be-predicted branch instruction according to program identification information corresponding to the to-be-predicted branch instruction and the branch prediction table; the readout circuit sends the target prediction information to a branch instruction execution and control unit, so that the branch instruction execution and control unit preforms prediction processing according to the target prediction information, and generates a prediction result corresponding to the to-be-predicted branch instruction.

Optionally, the branch predictor further includes an update circuit; the update circuit updates record information in the branch prediction table according to a branch instruction being executed by the processor and program identification information corresponding to the branch instruction being executed, where the record information includes branch prediction information corresponding to the branch instruction being executed, and the branch prediction information includes at least one of the following: jump target information and jump direction information.

Optionally, the prediction information determining module includes: a first search circuit and a second search circuit. The first search circuit searches, in the branch prediction table, for preset branch prediction information corresponding to the to-be-predicted branch instruction. The second search circuit searches, in the branch prediction table, for program identification information corresponding to the branch prediction information which is found by the first search circuit; extracts the target prediction information from the branch prediction information when the found program identification information is the same as current program identification information corresponding to the to-be-predicted branch instruction; and generates random prediction information for the to-be-predicted branch instruction when the found program identification information is different from the current program identification information, and determines the random prediction information as the target prediction information.

Optionally, the prediction information determining module includes a third search circuit. The third search circuit searches for program identification information corresponding to branch prediction information in the branch prediction table according to current program identification information corresponding to the to-be-predicted branch instruction; extracts the target prediction information from the branch prediction information when the found program identification information is the same as the current program identification information corresponding to the to-be-predicted branch instruction; and generates random prediction information for the to-be-predicted branch instruction when the found program identification information is different from the current program identification information, and determines the random prediction information as the target prediction information.

Optionally, the prediction information determining module includes an arithmetic circuit and a fourth search circuit. The arithmetic circuit determines index address information according to instruction address information of the to-be-predicted branch instruction; and performs hash processing according to the program identification information and the index address information to obtain target index address information. The fourth circuit searches, in the branch prediction table, for the target prediction information corresponding to the to-be-predicted branch instruction according to the target index address information.

Optionally, the fourth search circuit includes: a comparison sub-circuit and an adaptation sub-circuit. The comparison sub-circuit searches, in the branch prediction table, for branch prediction information corresponding to the target index address information, and compares preset program identification information corresponding to the branch prediction information with the program identification information corresponding to the to-be-predicted branch instruction. The adaptation sub-circuit extracts the target prediction information from the branch prediction information when the preset program identification information is the same as the program identification information corresponding to the to-be-predicted branch instruction; and generates random prediction information for the to-be-predicted branch instruction when the preset program identification information is different from the program identification information corresponding to the to-be-predicted branch instruction, and determines the random prediction information as the target prediction information.

An embodiment of the present invention also discloses a processor, which includes the aforementioned branch prediction circuit.

An embodiment of the present invention also discloses a control method for a branch prediction circuit, which includes:
determining target prediction information corresponding to a to-be-predicted branch instruction according to program identification information corresponding to the to-be-predicted branch instruction and a branch prediction table of the branch prediction circuit;
sending the target prediction information to a branch instruction execution and control unit, so that the branch instruction execution and control unit performs prediction processing according to the target prediction information, and generates a prediction result corresponding to the to-be-predicted branch instruction.

Optionally, record information in the branch prediction table is updated according to a branch instruction being currently executed and program identification information corresponding thereto, where the record information includes branch prediction information corresponding to the branch instruction being executed, and the branch prediction information includes at least one of the following: jump target information and jump direction information.

Optionally, the determining the target prediction information corresponding to the to-be-predicted branch instruction according to the program identification information corresponding to the to-be-predicted branch instruction and the branch prediction table of the branch prediction circuit includes:
searching, in the branch prediction table, for preset branch prediction information corresponding to the to-be-predicted branch instruction;
searching, in the branch prediction table, for program identification information corresponding to the branch prediction information; extracting the target prediction information from the branch prediction information when the found program identification information is the same as current program identification information corresponding to the to-be-predicted branch instruction; and generating random prediction information for the to-be-predicted branch instruction when the found program identification information is different from the current program identification information, and determining the random prediction information as the target prediction information.

Optionally, the determining the target prediction information corresponding to the to-be-predicted branch instruction according to the program identification information corresponding to the to-be-predicted branch instruction and the branch prediction table of the branch prediction circuit includes:
searching for program identification information corresponding to branch prediction information in the branch prediction table according to current program identification information corresponding to the to-be-predicted branch instruction;
extracting the target prediction information from the branch prediction information when the found program identification information is the same as the current program identification information corresponding to the to-be-predicted branch instruction;
generating random prediction information for the to-be-predicted branch instruction when the found program identification information is different from the current program identification information, and determining the random prediction information as the target prediction information.

Optionally, the determining the target prediction information corresponding to the to-be-predicted branch instruction according to the program identification information corresponding to the to-be-predicted branch instruction and the branch prediction table of the branch prediction circuit includes: determining index address information according to instruction address information of the to-be-predicted branch instruction; preforming hash processing according to the program identification information and the index address information to obtain target index address information; searching, in the branch prediction table, for the target prediction information corresponding to the to-be-predicted branch instruction according to the target index address information.

Optionally, the searching, in the branch prediction table, for the target prediction information corresponding to the to-be-predicted branch instruction according to the target index address information includes:
searching, in the branch prediction table, for branch prediction information corresponding to the target index address information, and comparing preset program identification information corresponding to the branch prediction information with the program identification information corresponding to the to-be-predicted branch instruction;
extracting the target prediction information from the branch prediction information when the preset program identification information is the same as the program identification information corresponding to the to-be-predicted branch instruction;
generating random prediction information for the to-be-predicted branch instruction when the preset program identification information is different from the program identification information corresponding to the to-be-predicted branch instruction, and determining the random prediction information as the target prediction information.

The embodiments of the present invention have the following advantages:

the branch prediction circuit in the embodiments of the present invention can determine the target prediction information corresponding to the to-be-predicted branch instruction according to the program identification information corresponding to the to-be-predicted branch instruction and the branch prediction table, and send the target prediction information to the branch instruction execution and control unit, so that the branch instruction execution and control unit performs prediction processing according to the target prediction information, thereby the branch guesses between different programs will not interfere with each other, realizing the isolation of the branch prediction information of different programs in the branch predictor, and solving the problem that the branch predictor in the prior art cannot distinguish between different programs which results in that a malicious attack program may indirectly manipulate the guessing behaviors of the branch predictor when the attacked program is executed.

### BRIEF DESCRIPTION OF THE DRAWINGS

FIG. 1 is a schematic structural diagram of a branch predictor according to the present invention;
FIG. 2 is a step flowchart of a control method for a branch prediction circuit according to an embodiment of the present invention;
FIG. 3 is a schematic structural diagram of a processor in an example of the present invention;
FIG. 4 is a schematic diagram of several pieces of saturating counter information sharing one piece of program identification information in an example of the present invention; and
FIG. 5 is a structural block diagram of an electronic device for controlling a branch predictor according to an exemplary embodiment.

### DETAILED DESCRIPTION OF THE EMBODIMENTS

In order to make the above purposes, features and advantages of the present invention more obvious and understandable, the present invention will be further described in detail with reference to the drawings and specific embodiments.

Modern computers usually follow the "Von Neumann" architecture; one of its cores is to store the instructions of the program in the memory as a type of data. The processor can perform execution according to instructions; before execution, the instruction is usually fetched from the memory to the inside of the processor, and this operation is called "instruction fetching". Instruction fetching refers to using the PC value as an address to read data from the memory based on the address. During the operation of the processor, the PC of the next instruction can be calculated based on the branch instruction. It can be seen that the result of the branch instruction can determine the instruction fetching of subsequent instructions.

For example, when the processor uses the simplest branch history table for branch prediction, the low-bits of PC as index can be used for prediction. Each entry of the branch history table is a two-bit saturating counter, which is configured to record history information of the jump direction of the branch instruction corresponding to the entry. For example, when the branch is successful, the saturation value recorded in the saturating counter is increased by one; when the branch is unsuccessful, the saturation value recorded in the saturating counter is decreased by one. This branch history table is also called a pattern history table (Pattern History Table, PHT). However, the prediction using the PHT table can only predict the jump direction of the branch instruction, but cannot predict the jump target of the branch instruction. Since the jump target of an indirect branch instruction cannot be obtained directly from the instruction, a mechanism is needed to predict the jump target of indirect branch instructions. In addition, the PHT table can generally be used only in the decoding stage; otherwise the use of the PHT table indexed by low-bits of PC in the fetching stage may make predictions for ordinary instructions which are also treated as branch instructions.

The existing processor can use a branch target buffer to perform branch prediction, thereby solving the above-mentioned problem of using the PHT table for prediction. The branch target buffer is also called a branch predictor. Specifically, in the case where the branch prediction table of the branch predictor is a BTB table, the branch predictor can compare the current PC with the PC of the to-be-found entry in the BTB table during branch prediction. For example, when the BTB table adopts a fully associative structure, the current PC is compared with branch instruction PCs of all entries in the fully associative structure. If the value of the branch instruction PC of a certain entry in the BTB table is equal to the current PC value, the entry can be determined as an equal entry, and it can be predicted whether to jump based on the saturating counter value of the equal entry and the jump address can be read out. The jump address may be the target address of the branch instruction. It should be noted that the BTB table may adopt a fully associative or multi-way set associative structure, and each entry of the BTB table can save the PC of a branch instruction, the target address of the branch instruction, and a two-bit saturating counter value that predicts whether the branch instruction is to jump. The two-bit saturating counter value can be used to represent the jump direction, such as two directions of jump and no jump.

The branch prediction is to perform a prediction for the jump direction and the jump target address of a branch instruction during the fetching or decoding stage of the branch instruction, and continue to fetch instructions according to the prediction result. After the branch instruction is executed, the prediction result can be corrected according to the determined branch jump direction or branch target address. If the branch guess is correct, it can end normally; otherwise, all instructions executed after the incorrect guess can be cancelled.

In summary, the branch predictor is introduced in the processor microstructure design to improve performance and cannot be directly accessed by software, so it is generally considered to be irrelevant to security. Specifically, in order to improve performance, technologies such as cache, branch guess, and out-of-order execution have been implemented in modern processors, and internal temporary cache for implementing these technologies cannot be directly accessed by software, so the branch predictor is considered to be irrelevant to security, and there is no physical or logical isolation between different programs. This leads to the possibility that the modification to the branch prediction table by a process A may be observed or used by another process B, that is, different programs can influence each other and control the branch prediction behaviors between each other. Attackers may use this feature of the traditional branch predictor to train the branch predictor in the attacking process, thereby controlling speculative execution behaviors of the designated program segment of the attacked process, and finally achieving the attack purpose.

It should be noted that the out-of-order execution and branch guess perform speculative execution on the instructions to improve performance, but all instructions of the out-of-order execution end in order. The temporary results of the out-of-order execution can be saved in a rename register or a cache. When ending in order, if a guess error is found, the above temporary results are discarded; if the guess is correct, the temporary results are written back to the memory and the software-accessible registers.

At present, attacks carried out using the branch predictor, such as a Spectre attack, mainly use a mechanism of out-of-order execution and speculative execution by a central processing unit (Central Processing Unit, CPU), access, in a cross-border way, operating system space in a very small "gap" between the out-of-order execution and the cancellation of instructions, and then illegally obtain system information using side-channel attack technology. For example, attacks carried out using the branch predictor usually illegally save the data in the memory to the temporary cache of the above microstructure in the short "gap" between the speculative execution and the orderly end, and guess the content that a user should not know by indirect access like beating around the bush.

One of core concepts of embodiments of the present invention is to defend against attacks carried out using the branch predictor from the perspective of microstructure design. Specifically, the embodiments of the present invention can use program identification information to control the branch predictor, so that the branch guesses by the branch predictor for different programs does not affect each other, that is, the isolation of the prediction information between different programs is realized based on the program identification information, so that the necessary link in the attack carried out using the branch predictor is disconnected, thereby solving the problem that the branch predictor in the prior art cannot distinguish between different programs which results in that a malicious attack program may indirectly manipulate guessing behaviors of the branch predictor when the attacked program is executed.

It should be noted that modern computers usually include a kernel mode and a user mode. The operating system runs in the kernel mode, and user programs run in the user mode. Programs of the user mode cannot access any content of the kernel mode. Once cross-border access occurs, the CPU will suspend the execution of the program and send an exception signal to the operating system; after receiving the exception signal, the operating system will kill the user process accessing in the cross-border way to ensure security. User programs and system programs can be placed at different address fields.

A special feature of the defense against attacks carried out using the branch predictor is that the instruction which executes the cross-border access is from the program where the spied data is located, that is, the context of the cross-border access instruction being executed on the speculative execution path has access authority to the accessed address, and the processor cannot internally detect the abnormal behavior of this access instruction through an illegal access exception. Therefore, the defense against attacks carried out using the branch predictor cannot simply start from monitoring the abnormality of the access authority to the cross-border address at the access office, but requires a different approach.

The embodiments of the present invention can seek defense ideas from another necessary link in the attacks carried out using the branch predictor. Specifically, for the situation where the training of the branch predictor by a program A can control the prediction behavior of a program B for the specific branch instruction, program identification information for distinguishing programs can be added into the branch predictor in the embodiments of the present invention, so that the result obtained by the training of the branch predictor by the program A can only be used in the program A, and the branch instruction of the program B will not be affected by it, that is, the necessary link of the Spectre attack is disconnected, thereby disrupting the implementation of the attack and reducing the probability of success of the attack carried out using the branch predictor.

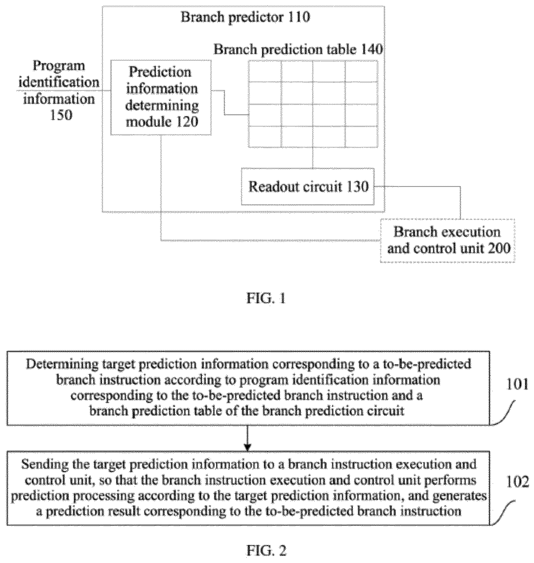

Specifically, an embodiment of the present invention provides a branch prediction circuit. The branch prediction circuit can include at least one branch predictor which is configured to perform branch prediction. As shown in FIG. 1, the branch predictor 110 can include a prediction information determining module 120, a readout circuit 130 and a branch prediction table 140. The prediction information determining module 120 can determine target prediction information corresponding to a to-be-predicted branch instruction according to program identification information corresponding to the to-be-predicted branch instruction and the branch prediction table 140. The readout circuit 130 can send the target prediction information to a branch instruction execution and control unit 200, so that the branch instruction execution and control unit 200 performs prediction processing according to the target prediction information, and generates a prediction result corresponding to the to-be-predicted branch instruction.

Referring to FIG. 2, FIG. 2 shows a step flowchart of a control method for a branch prediction circuit according to an embodiment of the present invention, which can specifically include the following steps.

Step 201: Determining target prediction information corresponding to a to-be-predicted branch instruction according to program identification information corresponding to the to-be-predicted branch instruction and a branch prediction table of the branch prediction circuit.

In a specific implementation, the branch prediction circuit can include one or more branch predictors. During the execution of a program, the branch prediction circuit can determine the target prediction information corresponding to the to-be-predicted branch instruction in the program through a prediction information determining module in the branch predictor. The prediction information determining module can determine the target prediction information corresponding to the to-be-predicted branch instruction according to the program identification information corresponding to the introduced to-be-predicted branch instruction and the branch prediction table in the branch prediction circuit, such as a PHT table, a BTB table and the like, so that a readout circuit can read out the target prediction information corresponding to the to-be-predicted branch instruction from the branch prediction table.

Step 202: Sending the target prediction information to a branch instruction execution and control unit, so that the branch instruction execution and control unit performs prediction processing according to the target prediction information, and generates a prediction result corresponding to the to-be-predicted branch instruction.

In the embodiment of the present invention, after reading out the target prediction information, the readout circuit can send the target prediction information that is read out to the branch instruction execution and control unit, thereby triggering the branch instruction execution and control unit to perform prediction processing according to the target prediction information. Specifically, after receiving the target prediction information, the branch instruction execution and control unit can perform prediction processing on the to-be-predicted branch instruction using the target prediction information, generate a corresponding prediction result, and then store the prediction result in the inside of the processor, so that the pipeline blockage caused by branch instructions can be avoided, and the throughput rate of the instruction pipeline can be improved.

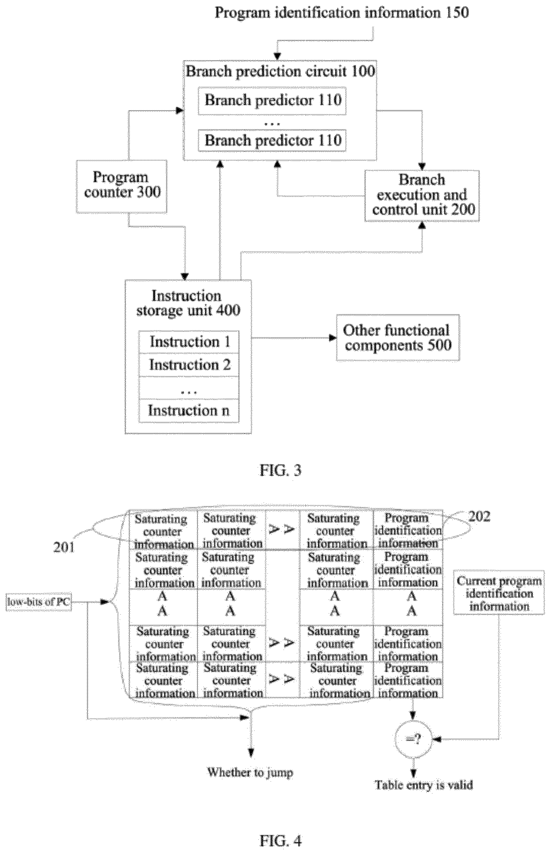

In a specific implementation, the branch prediction circuit is applied to a processor that executes branch instructions. As shown in FIG. 3, a CPU can include a branch prediction circuit 100, a branch execution and control unit 200, a program counter 300, an instruction storage unit 400, and other functional components 500. The branch prediction circuit 100 can include one or more branch predictors 110. The instruction storage unit 400 can store one or more instructions, for example, there may be an instruction 1, an instruction 2, an instruction 3 ... an instruction n, where n is an integer. The branch prediction circuit 100 can acquire instruction address information of the instruction stored in the instruction storage unit 400 through the program counter 300, such as acquiring the PC value of the branch instruction; determine the target prediction information corresponding to the to-be-predicted branch instruction based on the introduced program identification information 150, the instruction address information of the to-be-predicted branch instruction and the branch prediction table through the branch predictor 110; and send the target prediction information to the branch execution and control unit 200, so that the branch execution and control unit 200 can perform prediction processing according to the target prediction information.

As an example of the present invention, during the operation of the processor, the program corresponding to the to-be-predicted branch instruction may be identified through system software, thereby identifying the program identification information corresponding to the to-be-predicted branch instruction. Specifically, when the program is scheduled to be executed by the processor, the system software can perceive the program identification information of the program, and can transfer the perceived program identification information to the processor, for example, the program identification information can be transferred to processor hardware by the way of configuring registers and the like, so that the processor can identify program identification information corresponding to the instruction being executed and determine said program identification information as the program identification information corresponding to the to-be-predicted branch instruction in the program, thereby the branch guesses for programs in different processes can be isolated through the program identification information.

It should be noted that the program identification information can be used to distinguish difference features between different programs, such as a virtual machine number, a process number, address field information, a virtual address or some bit information of a physical address, and so on. The virtual machine number can be used to distinguish programs in different virtual machines; the process number can be used to distinguish programs in different processes; the address field information can be used to distinguish user programs and system programs. Of course, the program identification information may also be other identity (Identity, ID) information added to the program by system software such as an operating system, which is not limited in the embodiments of the present invention.

For example, the operating system can write the process number to a register existing on hardware inside the processor when scheduling a process, so that the processor can read out the process number from the register, and use the process number as the program identification information corresponding to the to-be-predicted branch instruction. For another example, the operating system can modify the content of a segment register inside the processor when switching the address space, that is, modify segment address information recorded in the segment register, so that the processor can identify the modified segment address information as the program prediction information corresponding to to-be-predicted branch instruction. The segment register may be a register existing on hardware inside the processor.

In this example, the program identification tag information can be used to isolate the prediction information belonging to different programs in the branch prediction table of the branch predictor. For example, the program identification information can be introduced into the calculation process of the access address of the branch predictor, and the program identification information and the instruction address information of the to-be-predicted branch instruction can be calculated by using a method such as hash (Hash) to obtain the target prediction information corresponding to the branch instruction. The target prediction information can be used to represent the predicted jump direction, jump target and so on corresponding to the branch instruction.

For another example, a "program identification information" field can be added to each table entry of the branch prediction table so that program identification information can participate in the operation of controlling the branch predictor, so that branch instructions in different programs can access different table entries of the branch predictor, which realizes the isolation of table entries belonging to different programs in the branch predictor. The information recorded in a table entry of the branch prediction table may include branch prediction information corresponding to a branch instruction, such as jump target information, jump direction information and the like. The jump target information can be used to determine the predicted jump target corresponding to the branch instruction, such as the jump target address and so on. The jump direction information can be used to determine the predicted jump direction corresponding to the to-be-predicted branch instruction. For example, when the jump target information is "1", it can be determined that the predicted jump direction corresponding to the to-be-predicted branch instruction is "jump"; when the jump target information is "0", it can be determined that the predicted jump direction corresponding to the to-be-predicted branch instruction is "no jump".

After determining the target prediction information corresponding to the to-be-predicted branch instruction, the branch predictor can send the target prediction information to the branch execution and control unit, so that the branch execution and control unit can use the target prediction information to perform prediction processing on the to-be-predicted branch instruction, to obtain a corresponding prediction result. Then the prediction result can be stored inside the processor, for example, the prediction result can be stored in an internal temporary cache such as a cache (Cache), a branch guess table, a rename register, and the like, so that the pipeline blockage caused by branch instructions can be avoided, and the throughput rate of the instruction pipeline and the processor performance can be improved.

In summary, after identifying the program identification information corresponding to the to-be-predicted branch instruction in the embodiment of the present invention, the target prediction information corresponding to the to-be-predicted branch instruction can be determined according to the program identification information, so that branch guesses between different programs will not interfere with each other, realizing the isolation of the branch prediction information of different programs in the branch predictor; and thus it is difficult to successfully establish the necessary link in the attacks carried out using the branch predictor, which can greatly reduce the probability of success of attacks carried out using the branch predictor.

In a specific implementation, the core idea of hardware branch prediction can be to predict the branch behavior based on the historical information of past branch execution. The historical information used for prediction can be stored in the branch prediction table of the branch predictor. Therefore, the execution information of any branch instruction can participate in the judgment of branch prediction. The branch prediction table of the branch predictor may include, but is not limited to, a BTB table, a PHT table, a return addresses stack (Return Addresses Stack, RAS) table, and so on, which is not limited in the embodiments of the present invention.

Specifically, after the execution of the branch instruction is completed, the jump direction and the jump target of the branch instruction can be determined, and then the relevant information of the branch instruction can be filled into the table entry of the branch prediction table of the branch predictor. The relevant information may include information related to the branch prediction, and may specifically include program identification information corresponding to the branch instruction, branch prediction information, instruction address information and so on. The instruction address information may be used to determine the address of the branch instruction, such as a PC used for branch prediction. The branch prediction information may include jump target information and/or jump direction information. The jump target information can determine the predicted jump target corresponding to the branch instruction, such as the predicted jump target address. The jump direction information may be used to determine the predicted direction corresponding to the branch instruction, such as the predicted jump direction for the branch instruction and so on.

In an optional embodiment of the present invention, the branch prediction circuit is applied to a processor, and the branch predictor in the branch prediction circuit can further include: an update circuit. The update circuit can update record information in the branch prediction table according to the instruction address information of the branch instruction being executed by the processor. The record information includes: program identification information corresponding to the instruction address information and branch prediction information.

Optionally, the control method for the branch prediction circuit provided by the embodiment of the present invention can further include: updating record information in the branch prediction table according to the instruction address information of the branch instruction being executed by the processor, where the record information includes: program identification information corresponding to the instruction address information and branch prediction information. Specifically, during the operation of the processor, instruction address information can be obtained for the branch instruction in a program run by the processor, to establish branch prediction information corresponding to the branch instruction according to the obtained instruction address information. The branch prediction information includes at least one of the following: jump target information and jump direction information. Then the branch prediction information and the program identification information can be associated and stored in the branch prediction table for the same branch instruction, which realizes that the branch prediction information and the program identification information corresponding to the branch instruction are recorded in the branch prediction table. For example, when a table entry of a certain branch instruction is created in the branch prediction table for the first time in the branch predictor, information such as the PC for branch prediction, the branch history prediction direction and the predicted jump target can be filled in the created table entry, and the program identification information corresponding to the branch instruction can be filled in the table entry at the same time, so as to perform branch prediction based on the program identification information and the PC subsequently.

It can be seen that the record information in the branch prediction table of the branch predictor in the embodiment of the present invention may include not only the PC for branch prediction, the branch history prediction direction and the predicted jump target that are recorded by the existing branch predictor, but also the newly added program identification information, which changes the structure of the branch prediction table of the branch predictor, so that the branch predictor can perform branch prediction according to the program identification information.

In an optional implementation of the present invention, the prediction information determining module can include: a first search circuit and a second search circuit. The first search circuit can search, in the branch prediction table, for preset branch prediction information corresponding to the to-be-predicted branch instruction. The second search circuit can search, in the branch prediction table, for program identification information corresponding to the branch prediction information that is found by the first search circuit; extract target prediction information from the branch prediction information when the found program identification information is the same as the current program identification information corresponding to to-be-predicted branch instruction; and generate random prediction information for the to-be-predicted branch instruction when the found program identification information is different from the current program identification information, and determine the random prediction information as the target prediction information.

In the embodiment of the present invention, optionally, the determining the target prediction information corresponding to the to-be-predicted branch instruction according to the program identification information corresponding to the to-be-predicted branch instruction and the branch prediction table of the branch prediction circuit can include: searching, in the branch prediction table, for preset branch prediction information corresponding to the to-be-predicted branch instruction; searching, in the branch prediction table, for program identification information corresponding to the branch prediction information; extracting target prediction information from the branch prediction information when the found program identification information is the same as the current program identification information corresponding to to-be-predicted branch instruction; and generating random prediction information for the to-be-predicted branch instruction when the found program identification information is different from the current program identification information, and determining the random prediction information as the target prediction information.

In a specific implementation, the first search circuit can search for preset branch prediction information corresponding to the to-be-predicted branch instruction in the branch prediction table of the branch predictor. After the first search circuit finds the branch prediction information, the second search circuit can search for program identification information corresponding to the branch prediction information in the branch prediction table, and judge whether the found program identification information corresponding to the branch prediction information matches the program identification information corresponding to the branch instruction; if matching, the target prediction information can be extracted from the found branch prediction information; if not matching, random prediction information can be generated for the branch instruction, and the random prediction information is determined as the target prediction information.

In an optional embodiment of the present invention, after searching for the program identification information corresponding to the branch prediction information, the method can further include: comparing the found program identification information with the current program corresponding to the to-be-predicted branch instruction. Specifically, the second search circuit can compare the found program identification information with the current program identification information corresponding to the to-be-predicted branch instruction, and judge whether the found program identification information is the same as the current program identification corresponding to the to-be-predicted branch instruction.

In an optional implementation, the second search circuit can include: a comparison sub-circuit and an adaptation sub-circuit. The comparison sub-circuit compares the found program identification information with the current program identification information corresponding to the to-be-predicted branch instruction. The adaptation sub-circuit extracts target prediction information from the branch prediction information when the found program identification information is the same as the current program identification information; and generates random prediction information for the to-be-predicted branch instruction when the found program identification information is different from the current program identification information, and determines the random prediction information as the target prediction information.

Specifically, the first search circuit can search for branch prediction information corresponding to the to-be-predicted branch instruction in the branch prediction table of the branch predictor, such as, determine the branch prediction information recorded in a certain table entry of the branch prediction table as the found branch prediction information when the branch instruction PC recorded in said table entry is the same as the PC of the current to-be-predicted branch instruction. The comparison sub-circuit in the second search circuit can obtain the program identification information corresponding to the found branch prediction information from the branch prediction table, and compare the obtained program identification information with the current program identification information corresponding to the to-be-predicted branch instruction, to judge whether the obtained program identification information is the same as the program information corresponding to the to-be-predicted branch instruction. If the obtained program identification information is the same as the program information corresponding to the to-be-predicted branch instruction, the found branch prediction information can be determined as the target prediction information; otherwise, the found branch prediction information can be discarded, and it is continued to search for branch prediction information corresponding to to-be-predicted branch instruction in the branch prediction table.

For example, when the branch predictor is used to preform branch prediction, the first search circuit can use a traditional searching method to make a search in the branch prediction table of the branch predictor to obtain branch prediction information of the to-be-predicted branch instruction. On the basis of obtaining the branch prediction information of the to-be-predicted branch instruction, the comparison sub-circuit in the second search circuit can compare the program identification information corresponding to the to-be-predicted branch instruction with the program identification information in the table entry where the found branch prediction information is located. If the program identification information corresponding to the to-be-predicted branch instruction is the same as the program identification information in the table entry where the obtained branch prediction information is located, that is, when the PC of the to-be-predicted branch instruction is the same as the branch instruction PC in the table entry that is found, and the program identification information corresponding to the to-be-predicted branch instruction is the same as the program identification information in the table entry, the branch prediction information in the table entry can be determined as the target prediction information and the target prediction information can be extracted from the table entry, so as to preform prediction processing using the target prediction information to obtain a prediction result corresponding to the to-be-predicted branch instruction. If the program identification information corresponding to the to-be-predicted branch instruction is different from the program identification information in the table entry where the found branch prediction information is located, for example, when the PC of the to-be-predicted branch instruction is the same as the branch instruction PC in the table entry that is found, but the program identification information corresponding to the branch instruction is different from the program identification information in the table entry, the found branch prediction information can be discarded, random prediction information can be generated, and the random prediction information can be determined as the target prediction information and returned to the processor to use, so that the processor preforms prediction processing base on the random prediction information, thereby reducing the probability of success of the attack. Of course, it is also possible to generate random prediction information and return the same to the processor when the program identification information corresponding to the to-be-predicted branch instruction is the same as the program identification information in the table entry, but the PC of the to-be-predicted branch instruction is different form the branch instruction PC in the table entry that is found, which is not limited in the embodiments of the present invention.

It should be noted that the random prediction information may be a random value consistent with the numerical range of the branch prediction information. For example, in the case where the normally returned branch prediction information is 0 and 1, the returned random prediction information may be any one of 0 and 1. For another example, in the case where the normal branch prediction information is 64-bit address data, the returned random prediction information may be a 64-bit random number, and so on.

Of course, in the embodiment of the present invention, it is also possible to search for corresponding branch prediction information in the branch prediction table according to the current program identification information corresponding to the to-be-predicted branch instruction, and compare the preset instruction address information corresponding to the found branch prediction information with the instruction address information of the to-be-predicted branch instruction, to determine the target prediction information using the found branch prediction information when the preset instruction address information is the same as the instruction address information of the to-be-predicted branch instruction. There is no specific limitation in the embodiments of the present invention.

In another optional implementation of the present invention, the determining the target prediction information corresponding to the to-be-predicted branch instruction according to the program identification information corresponding to the to-be-predicted branch instruction and the branch prediction table of the branch prediction circuit can include: searching, in the branch prediction table, for preset branch prediction information corresponding to the to-be-predicted branch instruction according to the current program identification information corresponding to the to-be-predicted branch instruction; comparing preset instruction address information corresponding to the found branch prediction information with the instruction address information of the to-be-predicted branch instruction; extracting the target prediction from the found branch prediction information when the preset instruction address information is the same as the instruction address information of the to-be-predicted branch instruction; and generating random prediction information for the to-be-predicted branch instruction when the preset instruction address information is different from the instruction address information of the to-be-predicted branch instruction, and determining the random prediction information as the target prediction information.

In a specific implementation, the prediction information determining module can include: a fifth search circuit and a sixth search circuit. The fifth search circuit searches, in the branch prediction table, for preset branch prediction information corresponding to the to-be-predicted branch instruction according to the current program identification information corresponding to the to-be-predicted branch instruction. The sixth search circuit compares preset instruction address information corresponding to the found branch prediction information with the instruction address information of the to-be-predicted branch instruction; extracts target prediction information from the found branch prediction information when the preset instruction address information is the same as the instruction address information of the to-be-predicted branch instruction; and generates random prediction information for the to-be-predicted branch instruction when the preset instruction address information is different from the instruction address information of the to-be-predicted branch instruction, and determines the random prediction information as the target prediction information.

In the embodiment of the present invention, optionally, the determining the target prediction information corresponding to the to-be-predicted branch instruction according to the program identification information corresponding to the to-be-predicted branch instruction and the branch prediction table of the branch prediction circuit includes:
searching for program identification information corresponding to branch prediction information in the branch prediction table according to the current program identification information corresponding to the to-be-predicted branch instruction;
extracting target prediction information from the branch prediction information when the found program identification information is the same as the current program identification information corresponding to the to-be-predicted branch instruction;
generating random prediction information for the to-be-predicted branch instruction when the found program identification information is different from the current program identification information, and determining the random prediction information as the target prediction information.

In a specific implementation, the prediction information determining module includes: a third search circuit.

The third search circuit searches for program identification information corresponding to branch prediction information in the branch prediction table according to the current program identification information corresponding to the to-be-predicted branch instruction; extracts target prediction information from the branch prediction information when the found program identification information is the same as the current program identification information corresponding to the to-be-predicted branch instruction; and generates random prediction information for the to-be-predicted branch instruction when the found program identification information is different from the current program identification information, and determines the random prediction information as the target prediction information.

In the embodiment of the present invention, optionally, the control method for the branch prediction circuit further includes: determining to-be-modified branch prediction information in the branch prediction table according to the branch result of the branch instruction, the branch prediction information including at least one of the following: jump target information and jump direction information; comparing program identification information corresponding to the to-be-modified branch prediction information with the program identification information of the branch instruction; modifying the to-be-modified branch prediction information according to the branch result when the program identification information corresponding to the to-be-modified branch prediction information is the same as the program identification information of the branch instruction.

In a specific implementation, the update circuit can determine to-be-modified branch prediction information in the branch prediction table according to the branch result of the branch instruction, the branch prediction information including at least one of the following: jump target information and jump direction information. The second search circuit compares program identification information corresponding to the to-be-modified branch prediction information with the program identification information of the branch instruction to determine whether the program identification information corresponding to the to-be-modified branch prediction information is the same as the program identification information of the branch instruction. The update circuit modifies the to-be-modified branch prediction information according to the branch result when the program identification information corresponding to the to-be-modified branch prediction information is the same as the program identification information of the branch instruction.

In an optional example of the present invention, after executing a branch instruction, the branch execution and control unit can generate a branch result of the branch instruction, and send the branch result to the branch predictor to trigger the branch predictor to update record information in the branch prediction table according to the branch result, so as to determine the accuracy of the branch prediction table. Specifically, the update circuit in the branch predictor can determine to-be-modified branch prediction information according to the branch result of the branch instruction. Subsequently, program identification information corresponding to the to-be-modified branch prediction information can be compared with the program identification information of the branch instruction through the comparison sub-circuit in the second search circuit, to judge whether the program identification information corresponding to the to-be-modified branch prediction information is the same as the program identification information of the branch instruction. If the program identification information corresponding to the to-be-modified branch prediction information is the same as the program identification information of the branch instruction, the update circuit can modify the to-be-modified branch prediction information according to the branch result.

For example, when modifying the table entry which already exists in the branch prediction table of the branch predictor according to the branch result, the branch predictor can compare the program identification information corresponding to the branch instruction with the program identification information in the modified table entry of the branch prediction table. When the program identification information corresponding to the branch instruction is the same as the program identification information in the modified table entry, and the PC of the branch instruction is the same as the branch instruction PC in the found table entry, namely, when the program identification information is same and the PCs are same, the predicted direction in the modified table entry can be modified according to the actual jump direction in the branch result, and/or the predicted jump target in the modified table entry can be modified according to the actual jump target address in the branch result. When the program identification information corresponding to the branch instruction is different from the program identification information in the modified table entry, the modified table entry may not be modified according to the branch result of the branch instruction.

It should be noted that the program identification information stored in the table entry of the branch predictor may be complete program identification information configured by the system software, or may be information obtained by compressing or mapping the complete program identification information, etc., which is not limited in the embodiments of the present invention.

The control method provided by the embodiment of the present invention can be applied to various types of branch predictors. The present invention will be further exemplified below with reference to specific branch predictors.

Specifically, the branch prediction table of the branch predictor can adopt a variety of branch guess structures, such as a RAS table with a stack structure, or a BTB table with a multi-way set associative or fully associative structure, or may be a PHT table, etc., which is not limited in the embodiments of the present invention.

As an example of the present invention, when the branch predictor in the processor uses a BTB table to perform branch prediction, a program identification information field may be added to the table entry of the BTB table, so that the processor can control the branch guess behavior of the branch predictor based on the program identification information and the branch instruction PC contained in the table entry of the BTB table. The BTB table may be a lookup table, and may adopt a multi-way set associative or fully associative structure. For example, the BTB table may adopt a fully associative structure, and the information in each table entry of the BTB table may include a branch instruction PC, a branch target address, branch history table (Branch History Table, BHT) information, program identification information, and so on.

The BHT information may be a saturating counter value, for example, it may be a two-bit saturating counter value. When performing branch prediction, the PC of the to-be-predicted branch instruction can be compared with the branch instruction PC stored in each table entry of the BTB table, and meanwhile the program identification information corresponding to the to-be-predicted branch instruction can be compared with program identification information of each table entry in the BTB table; and it can be considered that a hit entry of the branch instruction is found in the BTB table when the program identification information is determined as same and the PCs are determined as same through comparison, so that the jump target can be predicted based on the branch target address of the hit entry, and it can be predicted whether to jump based on the BHT information of the hit entry.

For example, when the PC of the to-be-predicted branch instruction is the same as the branch instruction PC stored in a certain table entry of the BTB table, and the program identification information in this table entry is the same as the program identification information corresponding to the to-be-predicted branch instruction, this table entry can be determined as a hit entry, and then it can be predicted whether to jump based on the BHT information. In an optional example, in the case where the BHT information is a two-bit saturating counter value, when the two-bit saturating counter value is larger than or equal to 2, the jump direction of the branch instruction can be predicted to be "jump"; when the two-bit saturating counter value is smaller than 2, the jump direction of the branch instruction can be predicted as "no jump".

When the execution of the branch instruction is completed, the BTB table of the branch predictor can be updated according to the execution result (namely, the branch result) of the branch instruction. Specifically, if the program identification information corresponding to the branch instruction matches the program identification information recorded in a certain table entry of the BTB table, and the PC of the branch instruction matches the branch instruction PC in this table entry, namely, when the two both match at the same time, information such as the branch target address and prediction direction of this table entry can be modified based on the branch result. If the program identification information and the PCs cannot match at the same time, it can be considered that the branch instruction does not have a table entry that already exists in the BTB table. For example, in the case where the PC of the branch instruction matches the branch instruction PC recorded in a table entry of the BTB table, but the program identification information corresponding to the branch instruction does not match the program identification information of the table entry, a new table entry can be created in the BTB table for the branch result of the branch instruction. When creating a new table entry, the program identification information of the branch instruction can be filed into the program identification information field of the new table entry, so that the target prediction information corresponding to the to-be-predicted branch instruction can be determined based on the program identification information subsequently.

In addition, a function return instruction is a special indirect branch instruction, which can also be predicted via a return addresses stack (Return Addresses Stack, RAS) prediction structure in addition to the above BTB table method. It should be noted that when executing a function call instruction, a return address (i.e., the first instruction after the function call instruction) can be pushed into the RAS stack; when returning from the function, it can be popped from the top of the RAS stack and be determined as the return address.

When applying the embodiment of the present invention, a program identification information field can be added to the RAS, so that it can be determined, according to the program identification information which is pushed into the RAS, whether the return address that is read from the top of the stack can be used. Specifically, the RAS can adopt a stack structure. The function call instruction can push the return address into the stack. When the function return instruction uses the RAS for prediction, the return address can be read from the top item of the stack as the predicted jump target, and it can be judged according to the program identification information of the top item of the stack whether to use the return address to preform prediction processing. For example, when the function call instruction is executed, in addition to pushing the subsequent PC value of the instruction (that is, the function return address) into the top of the stack, the program identification information of the function can be pushed into the stack at the same time. When the function return instruction uses the RAS for prediction, the program identification information and the return address can be taken from the top of the stack at the same time, and the current program identification information can be compared with the taken-out program identification information; when the two are the same, it is considered that the RAS is hit, and the taken-out return address can be used as the predicted jump target, otherwise a random prediction value is returned.

As another example of the present invention, in the case where the branch predictor uses a PHT table for prediction, program identification information can be added into the table entry of the PHT table in the embodiment of the present invention, to control the validity of the saturating counter in the table entry using the program identification information. It should be noted that the PHT table can make a prediction using the manner of the low-bits of PC as direct index, and each table entry of the PHT table can use a two-bit saturating counter to record history information of the branch jump direction.

In an optional implementation of the present invention, for the same one program, the saturating counter information corresponding to different branch instructions and the program identification information of the program can be stored in the same table entry of the PHT table. For example, as shown in FIG. 4, several pieces of saturating counter information and one piece of program tag information can be combined into a group 401 and be filled into the same table entry of the PHT table, so that all saturating counter information in the table entry shares one piece of program identification information 402, thereby reducing the overhead caused by adding program identification information to each table entry of the PHT table.

When performing branch prediction, the saturating counter information and program identification information stored in the table entry at the designated position can be read out according to a predetermined indexing mode. For example, as shown in FIG. 4, the table entry where the low-bits of PC of the to-be-predicted branch instruction is located can be found in the PHT table according to the low-bits of PC. The table entry may include saturating counter information and program identification information corresponding to the low-bits of PC. Then, the saturating counter information and the program identification information can be read from the found table entry, and the program identification information that is read out can be compared with the current program identification information. When the program identification information that is read out is the same as the current program identification information, it can be considered that the found table entry is valid, that is, it can be determined that the saturating counter information that is read out is valid, so that the branch direction can be predicted according to the content of the saturating counter information, namely it can be predicted whether to jump. If the program identification information that is read out is different from the current program identification information, the saturating counter information that is read out can be discarded, and the branch direction can be predicted in a random manner. When the execution of the branch instruction is completed, the PHT table can be updated according to the branch result that has been executed. When updating the PHT table, the saturating counter information of the designated table entry can be updated according to a prescribed rule and the current program identification information can be written into the designated table entry at the same time.

In a specific implementation, since the table entries of the PHT table have a limited number, in order to avoid conflicts between different branch instructions in the PHT table, different branch instruction can be hashed to different table entries using information about the correlation between branch instructions such as global branch history. The embodiment of the present invention can also use the program identification information to control the table entry index position of the PHT table, that is, the program identification information can be used to control the branch predictor, so that branch instructions in different programs are isolated from each other in the branch prediction table. For example, the effect of isolation can be achieved by the way of hashing.

Specifically, when searching the PHT table for prediction, the calculation of the index address of the branch instruction can include not only the branch instruction PC or branch history information, but also the current program identification information. The manner of incorporating the program identification information into the calculation of the PHT table index address may be an XOR method or other transformation forms, such as a splicing form, an interleaving form, a transformation form with partial splicing and partial XOR, etc., which is not limited in the embodiments of the present invention.

The same index address calculated by the traditional way can be transformed into two different address information through two different program identification information values based on these transformation forms; two different index addresses calculated by the traditional way can be transformed into two different address information based on the same one program identification information value.

In an optional embodiment of the present invention, the prediction information determining module can include: an arithmetic circuit and a fourth search circuit. The arithmetic circuit can determine index address information according to the instruction address information of the to-be-predicted branch instruction; and perform hash processing according to the program identification information and the index address information to obtain target index address information. The fourth search circuit can search, in the branch prediction table, for target prediction information corresponding to the to-be-predicted branch instruction according to the target index address information.

Optionally, the determining the target prediction information corresponding to the to-be-predicted branch instruction according to the program identification information corresponding to the to-be-predicted branch instruction and the branch prediction table of the branch prediction circuit can include: determining index address information according to instruction address information of the to-be-predicted branch instruction; preforming hash processing according to the program identification information and the index address information to obtain target index address information; searching, in the branch prediction table, for the target prediction information corresponding to the to-be-predicted branch instruction according to the target index address information.

Specifically, when performing branch prediction, the arithmetic circuit in the branch predictor can determine the index address information according to the instruction address information of the to-be-predicted branch instruction; preform hashing processing according to the program identification information and index address information to obtain the target index address information. Subsequently, the fourth search circuit can search for the target prediction information corresponding to the branch instruction in the branch prediction table according to the target index address information obtained by the arithmetic circuit. The instruction address information of the branch instruction can be used to represent the address of the branch instruction, such as a branch instruction PC, low-bit information of the branch instruction PC.

In an optional implementation, when performing branch prediction for the to-be-predicted branch instruction, the arithmetic circuit can calculate according to the instruction address information of the to-be-predicted branch instruction and the branch history information recorded in the branch prediction table to obtain index address information, and then preform hash processing for the index address information using the program identification information to obtain the target index address information, so that the fourth search circuit can search for the target prediction information corresponding to the to-be-predicted branch instruction in the branch prediction table according to the target index address information. The branch history information can be used to represent the global branch history information of the branch predictor.

In an optional embodiment of the present invention, the fourth search circuit can include: a comparison sub-circuit and an adaptation sub-circuit. The comparison sub-circuit can search, in the branch prediction table, for branch prediction information corresponding to the target index address information, and compare preset program identification information corresponding to the branch prediction information with the program identification information corresponding to the to-be-predicted branch instruction. The adaptation sub-circuit can extract the target prediction information from the branch prediction information when the preset program identification information is the same as the program identification information corresponding to the to-be-predicted branch instruction; and generate random prediction information for the to-be-predicted branch instruction when the preset program identification information is different from the program identification information corresponding to the to-be-predicted branch instruction, and determine the random prediction information as the target prediction information.

Optionally, the searching, in the branch prediction table, for the target prediction information corresponding to the to-be-predicted branch instruction according to the target index address information can include: searching, in the branch prediction table, for branch prediction information corresponding to the target index address information, and comparing preset program identification information corresponding to the branch prediction information with the program identification information corresponding to the to-be-predicted branch instruction; extracting the target prediction information from the branch prediction information when the preset program identification information is the same as the program identification information corresponding to the to-be-predicted branch instruction; generating random prediction information for the to-be-predicted branch prediction instruction when the preset program identification information is different from the program identification information corresponding to the to-be-predicted branch instruction, and determining the random prediction information as the target prediction information.

As an optional example of the present invention, an XOR calculation can be performed based on the low-bit information of the PC of the to-be-predicted branch instruction and the branch history information. For example, the XOR calculation can be performed on the low-bits of PC of the to-be-predicted branch instruction and the global branch history information bit-by-bit to obtain the index address information of the to-be-predicted branch instruction. Subsequently, hashing processing can be performed on the index address information and the current program identification information. For example, the XOR calculation is performed on the index address information and the current program identification information, so that the branch instructions of different programs can access different table entries, which realizes the isolation between table entries belonging to different programs in the branch prediction.

In summary, in the embodiments of the present invention, the table entries of different programs in the branch predictor are isolated using the program identification information, so that branch guesses between different programs will not interfere with each other, which solves the problem that different programs cannot be distinguished in the training and prediction processes of the branch predictor in the prior art which results in that a malicious attack program may indirectly manipulate the behaviors of the branch predictor when the attacked program is executed.

In addition, in the embodiments of the present invention, the branch prediction between different programs is isolated through the program identification information. The method is straightforward and does not depend on programs' own behaviors, which can avoid the negative impact on the performance when the program is running. The method is simple and practical, and can reduce the area and delay overhead of the circuit.

It should be noted that, for the sake of simplicity, the method embodiments are described as a series of action combinations, but those skilled in the art should know that the embodiments of the present invention are not limited by the sequence of actions described, because some steps may be performed in other orders or simultaneously according to the embodiments of the present invention. Secondly, those skilled in the art should also know that the embodiments described in the specification are all preferred embodiments, and the involved actions are not necessarily required by the embodiments of the present invention.

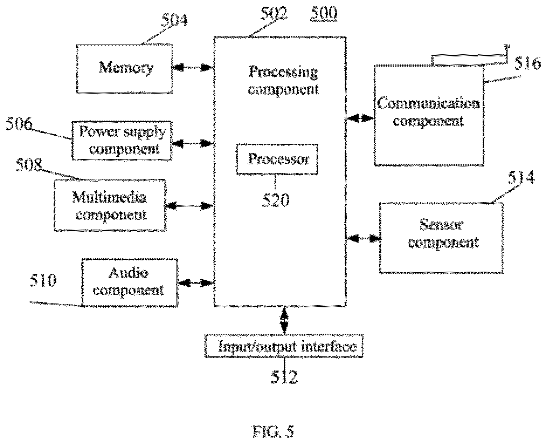

FIG. 5 is a structural block diagram of an electronic device 500 for controlling a branch prediction circuit according to an exemplary embodiment. For example, the electronic device 500 may be a mobile phone, a computer, a digital broadcasting terminal, a message transceiver, a game console, a tablet device, a medical device, a fitness device, a personal digital assistant, or the like.

Referring to FIG. 5, the electronic device 500 may include one or more of the following components: a processing component 502, a memory 504, a power supply component 506, a multimedia component 508, an audio component 510, an input/output (I/O) interface 512, a sensor component 514 and a communication component 516.

The processing component 502 generally controls the overall operations of the electronic device 500, such as operations associated with display, telephone calls, data communications, camera operations, and recording operations. The processing component 502 may include one or more processors 520 to execute instructions to complete all or part of the steps of the above methods. In addition, the processing component 502 may include one or more modules to facilitate interaction between the processing component 502 and other components. For example, the processing component 502 may include a multimedia module to facilitate interaction between the multimedia component 508 and the processing component 502. Optionally, the processor 520 may include a branch predictor.

The memory 504 is configured to store various types of data to support operations at the device 500. Examples of the data include instructions of any application or method operated on the electronic device 500, contact data, phone book data, messages, pictures, videos, and so on. The memory 504 may be implemented by any type of volatile or nonvolatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 506 provides power to various components of the electronic device 500. The power supply component 506 may include a power management system, one or more power supplies, and other components associated with generating, managing, and distributing power for the electronic device 500.

The multimedia component 508 includes a screen that provides an output interface between the electronic device 500 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may not only sense the boundary of the touching or sliding action, but also detect the duration and pressure related to the touching or sliding operation. In some embodiments, the multimedia component 508 includes a front camera and/or a rear camera. When the electronic device 500 is in an operation mode, such as a shooting mode or a video mode, the front camera and/or the rear camera may receive external multimedia data. Each front camera and rear camera may be a fixed optical lens system or have focal length and optical zoom capability.

The audio component 510 is configured to output and/or input audio signals. For example, the audio component 510 includes a microphone (MIC). When the electronic device 500 is in an operation mode, such as a call mode, a recording mode and a voice recognition mode, the microphone is configured to receive external audio signals. The received audio signals may be further stored in the memory 504 or be transmitted via the communication component 516. In some embodiments, the audio component 510 further includes a loudspeaker for outputting audio signals.

The I/O interface 512 provides an interface between the processing component 502 and a peripheral interface module. The peripheral interface module may be a keyboard, a click wheel, a button, etc. These buttons may include, but are not limited to, a home button, a volume button, a start button, and a lock button.

The sensor component 514 includes one or more sensors for providing the electronic device 500 with status assessment in various aspects. For example, the sensor component 514 can detect the on/off state of the device 500 and the relative positioning of the components, for example, the component is the display and keypad of the electronic device 500. The sensor component 514 can also detect the location change of the electronic device 500 or of a component of the electronic device 500, whether there is a contact of the user and the electronic device 500 or not, the orientation or acceleration/deceleration of the electronic device 500 and the temperature change of the electronic device 500. The sensor component 514 may include a proximity sensor configured to detect the presence of nearby objects without any physical contact. The sensor component 514 may also include an optical sensor, such as a CMOS or CCD image sensor, for use in imaging applications. In some embodiments, the sensor component 514 may also include an acceleration sensor, a gyro sensor, a magnetic sensor, a pressure sensor, or a temperature sensor.

The communication component 516 is configured to facilitate wired or wireless communication between the electronic device 500 and other devices. The electronic device 500 can access a wireless network based on a communication standard, such as WiFi, 2G or 3G, or a combination thereof. In an exemplary embodiment, the communication component 516 receives broadcast signals or information related to broadcast from an external broadcast management system via a broadcast channel. In an exemplary embodiment, the communication component 516 further includes a near-field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the electronic device 500 may be implemented by one or more application specific integrated circuits (ASICs), digital signal processors (DSPs), digital signal processing devices (DSPDs), programmable logic devices (PLDs), field-programmable gate arrays (FPGAs), controllers, microcontrollers, microprocessors or other electronic elements to implement the above methods.

In an exemplary embodiment, a non-transitory computer-readable storage medium including instructions is also provided, such as the memory 504 including instructions. The above-mentioned instructions can be executed by the processor 520 of the electronic device 500 to complete the above methods. For example, the non-transitory computer-readable storage medium may be a ROM, a random-access memory (RAM), a CD-ROM, a magnetic tape, a floppy disk, an optical data storage device, or the like.

The embodiments in this specification are described in a progressive manner. Each embodiment focuses on the differences from other embodiments, and these embodiments may be referred to for the same or similar parts there between.

Those skilled in the art should understand that the embodiments of the present invention may be provided as methods, apparatuses, or computer program products. Therefore, the embodiments of the present invention may take the form of an entire hardware embodiment, an entire software embodiment, or an embodiment combining software and hardware. Moreover, the embodiments of the present invention may take the form of computer program products implemented on one or more computer usable storage media (including but not limited to disk memories, CD-ROMs, optical memories, etc.) containing computer usable program code.

The embodiments of the present invention are described with reference to flowcharts and/or block diagrams of the methods, terminal devices (systems) and computer program products according to the embodiments of the present invention. It should be understood that each flow in the flowcharts and/or each block in the block diagrams and/or a combination of the flows and/or blocks in the flowcharts and/or block diagrams may be implemented by computer program instructions. These computer program instructions can be provided to the processor of a general-purpose computer, a special-purpose computer, an embedded processor or other programmable data processing terminal devices to produce a machine so that apparatuses for implementing designated functions in one or more flows of the flowchart and/or one or more blocks in the block diagram are generated through the instructions executed by the processor of the computer or other programmable data processing terminal devices.

These computer program instructions may also be stored in a computer-readable memory that can guide a computer or other programmable data processing terminal device to work in a predictive manner, so that the instructions stored in the computer-readable memory produce a manufacture including an instruction apparatus, and the instruction apparatus implements the designated functions in one or more flows in the flowchart and/or one or more blocks in the block diagram.

These computer program instructions can also be loaded onto a computer or other programmable data processing terminal device, so that a series of operation steps are performed on the computer or other programmable terminal device to generate computer-implemented processing, so that the instructions executed by the computer or other programmable terminal device provide steps for implementing designated functions in one or more flows in the flowchart and/or one or more blocks in the block diagram.

Although the preferred embodiments of the embodiments of the present invention have been described, those skilled in the art can make additional changes and modifications to these embodiments once they learn the basic inventive concept. Therefore, the appended claims are intended to be construed as including the preferred embodiments and all changes and modifications falling within the scope of the embodiments of the present invention.

Finally, it should be noted that relational terms such as first and second herein are used only to distinguish one entity or operation from another entity or operation, and do not necessarily require or imply any such actual relationship or order between these entities or operations. Furthermore, the terms "include", "comprise" or any other variants thereof are intended to cover non-exclusive inclusion, so that a process, a method, an article or a terminal device that includes a series of elements includes not only those elements, but also those not explicitly listed, or further includes the elements inherent to such process, method, article or terminal device. Without more restrictions, for an element defined by the sentence "including one ...", the process, method, article, or terminal device that includes the element does not preclude the existence of another identical element.

The control method and apparatus for a branch predictor, an electronic device, and a storage medium provided by the present invention have been described in detail above, and specific examples are used to explain the principles and implementations of the present invention. The descriptions of the above embodiments are only used to help understand the methods of the present invention and the core ideas thereof; at the same time, for those skilled in the art, there will be changes in the specific implementations and application ranges based on the ideas of the present invention. In summary, the content of this specification should not be construed as a limitation to the present invention.

## Claims

1. A branch prediction circuit, applied to a processor having an ability to execute a branch instruction, wherein the branch prediction circuit comprises at least one branch predictor, and the branch predictor comprises a prediction information determining module, a readout circuit and a branch prediction table; wherein,
the prediction information determining module determines target prediction information corresponding to a to-be-predicted branch instruction according to program identification information corresponding to the to-be-predicted branch instruction and the branch prediction table;
the readout circuit sends the target prediction information to a branch instruction execution and control unit, so that the branch instruction execution and control unit performs prediction processing according to the target prediction information and generates a prediction result corresponding to the to-be-predicted branch instruction.

2. The branch prediction circuit according to claim 1, wherein the branch predictor further comprises an update circuit; the update circuit updates record information in the branch prediction table according to a branch instruction being executed by the processor and program identification information corresponding to the branch instruction being executed, wherein the record information comprises branch prediction information corresponding to the branch instruction being executed, and the branch prediction information comprises at least one of the following: jump target information and jump direction information.

3. The branch prediction circuit according to claim 1 or 2, wherein the prediction information determining module comprises a first search circuit and a second search circuit;
the first search circuit searches, in the branch prediction table, for preset branch prediction information corresponding to the to-be-predicted branch instruction;
the second search circuit searches, in the branch prediction table, for program identification information corresponding to the branch prediction information which is found by the first search circuit; extracts the target prediction information from the branch prediction information when the found program identification information is the same as current program identification information corresponding to the to-be-predicted branch instruction; and generates random prediction information for the to-be-predicted branch instruction when the found program identification information is different from the current program identification information, and determines the random prediction information as the target prediction information.

4. The branch prediction circuit according to claim 1 or 2, wherein the prediction information determining module comprises a third search circuit;
the third search circuit searches for program identification information corresponding to branch prediction information in the branch prediction table according to current program identification information corresponding to the to-be-predicted branch instruction; extracts the target prediction information from the branch prediction information when the found program identification information is the same as the current program identification information corresponding to the to-be-predicted branch instruction; and generates random prediction information for the to-be-predicted branch instruction when the found program identification information is different from the current program identification information, and determines the random prediction information as the target prediction information.

5. The branch prediction circuit according to claim 2 or 3, wherein the prediction information determining module comprises an arithmetic circuit and a fourth search circuit;
the arithmetic circuit determines index address information according to instruction address information of the to-be-predicted branch instruction; and performs hash processing according to the program identification information and the index address information to obtain target index address information;
the fourth search circuit searches, in the branch prediction table, for the target prediction information corresponding to the to-be-predicted branch instruction according to the target index address information.

6. The branch prediction circuit according to claim 5, wherein the fourth search circuit comprises: a comparison sub-circuit and an adaptation sub-circuit;
the comparison sub-circuit searches, in the branch prediction table, for branch prediction information corresponding to the target index address information, and compares preset program identification information corresponding to the branch prediction information with the program identification information corresponding to the to-be-predicted branch instruction;
the adaptation sub-circuit extracts the target prediction information from the branch prediction information when the preset program identification information is the same as the program identification information corresponding to the to-be-predicted branch instruction; and generates random prediction information for the to-be-predicted branch instruction when the preset program identification information is different from the program identification information corresponding to the to-be-predicted branch instruction, and determines the random prediction information as the target prediction information.

7. A processor, comprising the branch prediction circuit according to any one of claims 1-6.

8. A control method for a branch prediction circuit, comprising:
determining target prediction information corresponding to a to-be-predicted branch instruction according to program identification information corresponding to the to-be-predicted branch instruction and a branch prediction table of the branch prediction circuit;
sending the target prediction information to a branch instruction execution and control unit, so that the branch instruction execution and control unit performs prediction processing according to the target prediction information and generates a prediction result corresponding to the to-be-predicted branch instruction.

9. The method according to claim 8, further comprising:
updating record information in the branch prediction table according to a branch instruction being currently executed and program identification information corresponding thereto, wherein the record information comprises branch prediction information corresponding to the branch instruction being executed, and the branch prediction information comprises at least one of the following: jump target information and jump direction information.

10. The method according to claim 8 or 9, wherein the determining the target prediction information corresponding to the to-be-predicted branch instruction according to the program identification information corresponding to the to-be-predicted branch instruction and the branch prediction table of the branch prediction circuit comprises:
searching, in the branch prediction table, for preset branch prediction information corresponding to the to-be-predicted branch instruction;
searching, in the branch prediction table, for program identification information corresponding to the branch prediction information; extracting the target prediction information from the branch prediction information when the found program identification information is the same as current program identification information corresponding to the to-be-predicted branch instruction; and generating random prediction information for the to-be-predicted branch instruction when the found program identification information is different from the current program identification information, and determining the random prediction information as the target prediction information.

11. The method according to claim 8 or 9, wherein the determining the target prediction information corresponding to the to-be-predicted branch instruction according to the program identification information corresponding to the to-be-predicted branch instruction and the branch prediction table of the branch prediction circuit comprises:
searching for program identification information corresponding to branch prediction information in the branch prediction table according to current program identification information corresponding to the to-be-predicted branch instruction;
extracting the target prediction information from the branch prediction information when the found program identification information is the same as the current program identification information corresponding to the to-be-predicted branch instruction;
generating random prediction information for the to-be-predicted branch instruction when the found program identification information is different from the current program identification information, and determining the random prediction information as the target prediction information.

12. The method according to claim 8 or 9, wherein the determining the target prediction information corresponding to the to-be-predicted branch instruction according to the program identification information corresponding to the to-be-predicted branch instruction and the branch prediction table of the branch prediction circuit comprises:
determining index address information according to instruction address information of the to-be-predicted branch instruction;
preforming hash processing according to the program identification information and the index address information to obtain target index address information;
searching, in the branch prediction table, for the target prediction information corresponding to the to-be-predicted branch instruction according to the target index address information.

13. The method according to claim 12, wherein the searching, in the branch prediction table, for the target prediction information corresponding to the to-be-predicted branch instruction according to the target index address information comprises:
searching, in the branch prediction table, for branch prediction information corresponding to the target index address information, and comparing preset program identification information corresponding to the branch prediction information with the program identification information corresponding to the to-be-predicted branch instruction;
extracting the target prediction information from the branch prediction information when the preset program identification information is the same as the program identification information corresponding to the to-be-predicted branch instruction;
generating random prediction information for the to-be-predicted branch instruction when the preset program identification information is different from the program identification information corresponding to the to-be-predicted branch instruction, and determining the random prediction information as the target prediction information.
